(19) **Europäisches Patentamt / European Patent Office / Office européen des brevets**

(11) **EP 1 573 986 B1**

(12) **EUROPEAN PATENT SPECIFICATION**

(45) Date of publication and mention of the grant of the patent:
**01.02.2012 Bulletin 2012/05**

(21) Application number: **03813733.7**

(22) Date of filing: **25.09.2003**

(51) Int Cl.:
**H04L 12/56** (2006.01)     **H04L 29/06** (2006.01)
**H04Q 11/04** (2006.01)

(86) International application number:
**PCT/SE2003/001490**

(87) International publication number:
**WO 2004/057813 (08.07.2004 Gazette 2004/28)**

(54) **METHOD AND ARRANGEMENT IN A COMMUNICATION SYSTEM**

VERFAHREN UND ANORDNUNG IN EINEM KOMMUNIKATIONSSYSTEM

PROCEDE ET DISPOSITIF DANS UN SYSTEME DE COMMUNICATION

(84) Designated Contracting States:
**AT BE BG CH CY CZ DE DK EE ES FI FR GB GR HU IE IT LI LU MC NL PT RO SE SI SK TR**

(30) Priority: **20.12.2002 SE 0203872**

(43) Date of publication of application:
**14.09.2005 Bulletin 2005/37**

(73) Proprietor: **NetSocket, Inc.**
**Plano, TX 75025 (US)**

(72) Inventors:
• **SUNDQVIST, Jim**
  **S-976 32 Lulea (SE)**
• **BODIN, Ulf**
  **S-954 42 S Sunderbyn (SE)**
• **SCHELÉN, Olov**
  **S-945 91 Norrfjärden (SE)**

• **LINDHOLM, Daniel**
  **S-973 32 Lulea (SE)**

(74) Representative: **Epping - Hermann - Fischer**
**Patentanwaltsgesellschaft mbH**
**Postfach 20 07 34**
**80007 München (DE)**

(56) References cited:
**WO-A1-02/056564     US-B1- 6 310 857**
**US-B1- 6 459 681**

• **TECK KIONG LEE ET AL.: 'Efficiency comparisons between different model-based and measurement-based connection admission control under heavy traffic' GLOBAL TELECOMMUNICATIONS CONFERENCE vol. 2, May 1999, pages 1629 - 1633, XP001016976**

**EP 1 573 986 B1**

**Description**

FIELD OF THE INVENTION

The present invention relates to a method for making admission control according to the preamble of claim 1. Furthermore it relates to a node in a network comprising software for performing admission control according to the preamble of claim 16.

BACKGROUND OF THE INVENTION

In recent years, asynchronous networks such as Internet Protocol (IP) and Asynchronous Transfer Mode (ATM) have become tremendously popular. These networks interconnect various lower layer networks (e.g., Ethernet, SONET, SDH, ADSL, etc.) to provide connectivity between end-points. In particular, the Internet has evolved to a global multi service network through which a great span of different applications communicate (e.g., web browsing, email, telephony, media streaming, and video conferencing).

In asynchronous networks, differentiated forwarding services can be created. While ATM offers multiple forwarding services (e.g., available bit-rate (ABR), constant bit-rate (CBR), etc.), IP networks has traditionally only offered one forwarding service (i.e., the best-effort service). In recent years, formal support for differentiated services has been added to the Internet architecture and Internet Service Providers (ISPs) can thereby configure their IP networks for multiple services.

Configuring an asynchronous network for multiple services, of which some offer guarantees or assurances on the forwarding quality given to users, means to divide forwarding resources such as buffer capacity and forwarding capacity into different classes. We refer to both buffer capacity and forwarding capacity as forwarding recourses. Then, the admission to classes that will carry traffic for which guarantees or assurances shall be given needs to be controlled. We refer to this as admission control. Note that admission control can be used also to maintain guarantees or assurances in single service networks.

The admission control mechanism can be distributed in network nodes, or centralized in one or more servers or dedicated computers. All these different possibilities are in this text called a node. When it is referred to a node in this text it is thus meant to include both network nodes and servers and dedicated computers. When distributed, the admission control can be invoked by e.g. a signalling protocol. The location of the admission control mechanism does not directly influence the forwarding quality guaranteed or assured for the service in question. Instead the location may affect scalability, performance, etc.

For asynchronous networks, high utilisation of forwarding resources can be achieved through statistical multiplexing. Then, for services offering guarantees or assurances on forwarding quality, the amount of traffic at individual links needs to be carefully controlled.

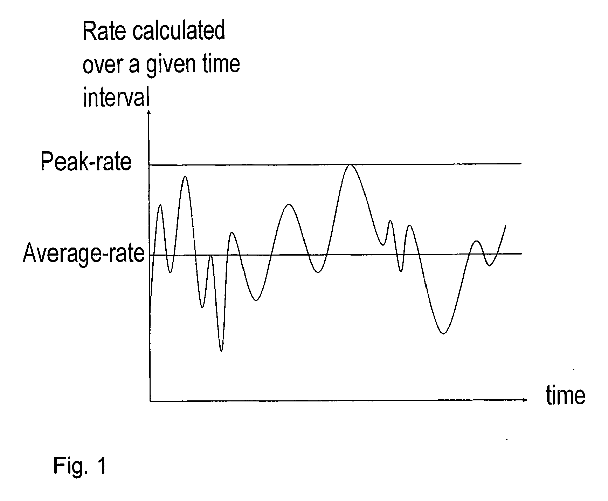

Knowing the peak-rates of Application Data Flows, ADFs, deterministic forwarding guarantees can be offered through admission control (i.e., sources make an admission request through the network, or to an admission control server before sending any traffic). A peak-rate is the maximum rate at which an ADF can send traffic in a given time interval, see fig. 1. The average-rate is often calculated over a long time interval, while peak-rate should be calculated over a much shorter time interval.

Unfortunately, offering deterministic guarantees results in low network utilization when ADFs have varying sending rates (e.g., video coders such as ITU-T H.263 produces varying amounts of data depending on movements in the encoded picture). For ADFs having varying sending rates, network utilization can be improved though statistical multiplexing. Several independent flows sharing a common resource are said to benefit from statistical multiplexing if the sum of their peak rates can exceed the total link bandwidth without resulting in quality degradation. This is based on the assumption that the flows send at their peak-rates independently of each other and therefore distributed over time.

To improve network utilization through statistical multiplexing, the sum of peak-rates for ADFs sharing a common link must exceed that link's forwarding capacity, or the portion of that link's capacity allocated for these ADFs. Note, however, that the sum of these ADFs average rates must not exceed that capacity. Then, the link will be overloaded and no forwarding guarantees can be offered.

Since the sum of peak-rates can exceed the (allocated) link capacity, offering deterministic guarantees is not possible. Statistical guarantees on that e.g. the loss-rate at such a link does not exceed a pre-defined value can however be offered. Then, statistical properties of each individual ADF, or the aggregate of all ADFs must be known to calculate the risk of violating the statistical guarantee when accepting an additional ADF for the link in question.

Statistical properties of ADFs might be known beforehand (e.g., they can be given from the definition of the speech codec used), or they can be estimated through measurements. The statistical properties for traffic of e.g. IP telephony applications can be reasonably predictable and the risk of violating the statistical guarantee in question can thus be calculated without measuring these properties.

The statistical properties of ADFs can however be very unpredictable (e.g., for video conference applications the statistical properties-of their traffic depends on movements of people participating in the conference). For such applications, measuring these properties is preferable.

The information on statistical properties needs to be accurate for very short time-scales to be used in the mathematical methods used to calculate the risk of violating given guarantees. This means that measurement-based admission control for statistically guaranteed services requires network nodes to perform operations with high time complexity (i.e., processing intensive operations).

Another approach to offer assurances on forwarding quality while allowing for statistical multiplexing is to make admission control decisions using a forwarding resource threshold for each link in a network. That is, a maximum amount of forwarding resources requested from ADFs for each such link, e.g. a maximum sum of ADF bit-rates for each such link. We refer to this threshold as the provisioning level. In the claims it is however called threshold.

The sum of accepted forwarding resources for ADFs plus the forwarding resource of the request to be evaluated can be compared with each link's provisioning level to decide whether one or more of these levels is exceeded or not. An advantage with this approach is that support for advance reservations easily can be included. Such a threshold based admission control is described in "Quality of Service Agents in the Internet. Ph.D. thesis Olov Schelén, August 1998. ISSN 1402-1544. ISRN LTU-DT-98/26-SE". IQ-Man™ described in this thesis take admission decisions using separate provisioning level for each link in a network.

A problem in this system is that the links are not fully utilised when aggregates of ADFs having different peak and average rates use the links.

US 6,310,857 B1 addresses the problem that an individual application data flow requesting admission to a link might have a strongly fluctuating bit-rate over time, due to small video conversion bit-rates during scene level periods as opposed to between-scene changes. This document deals with how to smoothen scenic transitions of a single video application data flow. The overall provisioning level of a network link, however, is not addressed therein.

The publication ,EFFICIENCY COMPARISONS BETWEEN DIFFERENT MODEL-BASED AND MEASUREMENT-BASED CONNECTION ADMISSION CONTROL UNDER HEAVY TRAFFIC' by Teck Kiong Lee and Moshe Zukerman, Global Telecommunications Conference - Globecom '99, Dec. 1999, 12-05-1999 - 12-09-1999, pages 1629 to 1633, vol. 2, refers to applying a Gaussian mode in case that the total number of connections to a network link exceeds a threshold number.

SUMMARY OF THE INVENTION

An object of the invention is to provide a method for admission control where the forwarding capacity on the links are highly utilised through statistical multiplexing while offering an assurance on forwarding quality.

A further object of the invention is to limit the amount of measurements especially in the network nodes.

These objects are achieved by a method and a node as defined in the independent claims 1 and 7.

Preferred embodiments are described in the dependent claims.

BRIEF DESCRIPTION OF THE DRAWINGS

Fig. 1 shows a diagram of peak rate and average rate.

Fig. 2 is a diagram over the utilised forwarding capacity on a link.

Fig. 3 is a diagram over the utilised forwarding capacity on a link.

Fig. 4 is a diagram over the utilised forwarding capacity on a link.

Fig. 5 shows a node according to a first embodiment of the invention.

Fig. 6 shows a node according to a second embodiment of the invention.

DETAILED DESCRIPTION OF EMBODIMENT

Assurances on forwarding quality can be offered through provisioning level based admission control. However, to benefit from multiplexing gains, the admission control must allow for limited overbooking (i.e., the sum of all accepted ADFs' peak-rates must be allowed to exceed the allocated link capacities). The problem is how to select levels of overbooking for each link in a network. These levels must support target quality assurances while allowing high degrees of statistical multiplexing. The level of overbooking is determined from the sum of all accepted ADFs' peak-rates and the provisional level used.

The level of overbooking for a particular link is determined by a number of parameters; the link speed, its buffer capacity or acceptable delay, acceptable loss-rate, multiplexing properties of present ADFs, and the mix of ADFs with different multiplexing properties (i.e., the traffic mix). While link properties and parameters defining the target forwarding quality are known beforehand, multiplexing properties of different ADFs need to be estimated or measured.

The invention presented in this application is a method for making admission control where a requested forwarding resource threshold, usually a bit-rate threshold, is set for each link in order to offer assurances on forwarding quality. The level of said threshold is chosen by utilising knowledge about multiplexing properties of the ADFs on each link.

The following embodiment is a method to measure multiplexing properties of aggregated ADFs on-line, and to use this information to adapt provisioning levels, also called thresholds. The adaptation aims at levels giving appropriate overbooking without any knowledge of individual ADFs' multiplexing properties. Thus, assumptions on user behaviors and application configurations are not needed in this embodiment. The price for this is the operation of on-line measurements in network nodes.

We assume that a provisioning level is associated with each link in a network offering assurances on forwarding quality. Such provisioning level can e.g. be managed by a network node or by an admission control server.

Moreover, we assume that applications directly or indirectly define a capacity, usually a bit-rate in their admission requests and that the meaning of these bit-rates is known (e.g., they are the peak-rate of each different ADF). Defining bit-rates indirectly means that an application's identity can be detected by some mechanism and that the identity can be mapped to a bit-rate with known meaning.

Measuring multiplexing properties of ADF aggregates for provisioning:

In the embodiment of the invention, we do not assume any knowledge of individual ADFs' multiplexing properties. Instead, multiplexing properties of traffic (ADF) aggregates are measured and used to adapt provisioning levels for each link in a network. The method for this adaptation includes the following actions:

Each link in the network is initially provisioned.

Each link has a fixed amount of actual forwarding resources set aside for a particular service. We refer to these resources as allocated resources, and the capacity part of them as allocated capacity. The amount of resources provisioned to match the allocated resources is called res_max (i.e., the provisioning level). The resources reserved for the actual traffic on the link (act) is called res. The reserved resources include both forwarding capacity and buffer capacity. However, since the amount of reserved buffer capacity is proportional to the amount of reserved forwarding capacity, we refer to res as the reserved capacity.

Note that since res_max may change over time, another more stable level should be introduced in order to support reservations in advance (e.g., some previous value of res_max that has proven through measurements to not give violations in forwarding quality).

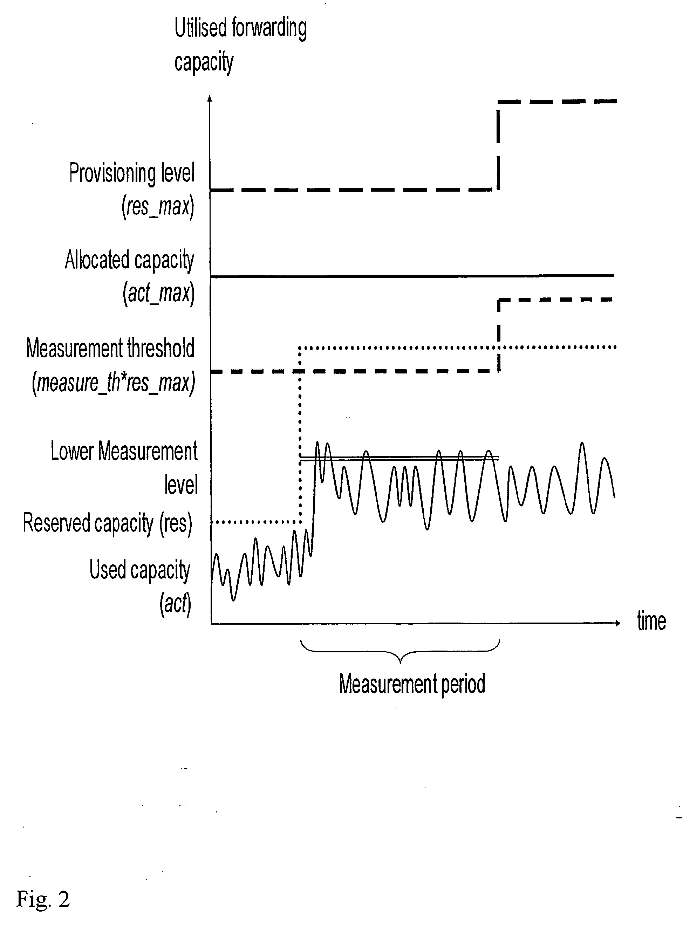

Measurements are in this embodiment performed at two different rates. A measurement at a third rate is also possible and sometimes preferable. This is described later. One of these two rates, called the first rate, also referred to as act_max can be equal to or slightly lower than the allocated capacity of the link. To have a safety margin it could be preferred to use a first rate which is slightly lower than the allocated capacity of the link. In figs. 2-4 act_max is shown to be equal to the allocated capacity but it should be understood that the first rate, act_max suitably could be a bit lower than the allocated capacity for giving a safety margin. The other rate, called the second rate, can be dependent on the reserved resources on the link and the threshold (i.e., the provisioning level). For example the second rate can be equal to

$$k * (res/res\_max) * act\_max$$

where k is a constant.

In the following, we refer to the second rate as the second measurement level and to the first rate, act_max, as the first measurement level.

Measurements are initiated when the reservation level (res) reaches a fraction of res_max called measure_th. Given a 10 Mbps res_max and measure_th of 0.8, measurements will start at a reservation level of 8 Mbps (res_max * measure_th). This is the measurement threshold.

Note that the fraction res/res_max is an invariant related to the measurement threshold since res needs to be equal or larger than this threshold (i.e., res_max * measure_th) for measurements to be initialized. Note that measurements at the first rate (i.e. at the act_max) can be made continuously since the rate never changes. Measurements at the second rate need however to be initialised, or re-initialised to reflect changes in the reserved capacity (res).

For assurances of maximum delay and loss-rate, measurements of traffic rates on the link are performed by measuring means. The measuring means could for example be two token bucket (TB) filters (both configured with a depth in number of bytes or bits corresponding to the assured maximum delay and the two different rates to be monitored). By counting network data units (e.g., IP packets) that conform and those that do not conform (i.e., excess data units) to each of these filters, loss-rates can be calculated for the two rates monitored. Other methods for performing the measurements are also possible. For example Time sliding windows could be used.

For the measurements, multiple samples of appropriate length should be taken. E.g., a sample length of two minutes may be feasible in certain network nodes without overloading their CPU (e.g., with operations of matching access lists to two TB filter instances). However, to track peaks in ADF bit-rates caused by changing user behaviours (e.g., a period with intensive discussions and hand waving in a video conference), multiple such samples should be taken to cover a longer period (e.g., 30 minutes). Note that the sample length determines over which time-scale given assurances are valid (i.e., loss-rates may be higher at shorter time-scales than the one used for measurement samples).

If the reservation level changes during the measurement period, there are several ways of handling this situation properly. E.g.:

- Abort the measurement period, and use only the "stable" part.

- Abort the current measurement period, and initiate a new measurement period.

- Continue measuring until the measurement period is finished. This means to change the lower measurement rate according to the new res/res_max after each change in reservation level (res).

- Continue measuring until the period is finished (i.e., by changing the lower measurement rate after each change in reservation level), or until the reservation level becomes less than the level at which measurements are initiated.

- Block or delay new reservation requests until the measurement period is finished. This method can be used when res is close to max_res.

Each measurement sample can result in three different cases; case 1 - increase the provisioning level, case 2 - preserve the current provisioning level, and case 3 - decrease the provisioning level. These cases are described separately in the following three sections. Thereafter, the algorithm is more formally described.

Case one: increase the provisioning level

In figure 2 a diagram over the utilised forwarding capacity on a link where the used capacity is low and no quality violations exist is shown. For the sake of simplicity we continue here with the example with the link having 10 Mbps allocated. Links with other capacities are of course also possible to use. Say that all data units conform to the 10 Mbps TB filter and that the loss-rate calculated from conforming and excess data units at the 8 Mbps TB filter is less than the assured loss-rate. This indicates that the traffic does not use all reserved forwarding capacity and that res_max thus can be increased to allow for more traffic. However, to make such a decision, multiple measurement samples should be examined to limit the risk that true peak-rates are not detected.

The increase of the threshold can be related to the assured loss rate and the actual loss rate. To decide how much to increase the provisioning level, an assumption on the relation between loss-rate and load can be used. This relation can for example be assumed to be linear or exponential. If the relation between loss-rate and load is assumed to be exponential the new provisioning level can suitably be chosen from the old through the following equation:

$$\text{res\_max} = \text{res\_max} * \log \text{assured\_lr} / \log \text{act\_lr} \qquad \text{(equation 1)}$$

Say that the measured actual loss-rate (act_lr) is 0.1% and that the assured loss-rate (assured_lr) is 1%. For this example, equation I gives a new provisioning level of 11 Mbps. Note that increasing the level based on measurements at rates lower than what is allocated can be considered conservative. This is because ADFs multiplexes equally or better at larger aggregates. Thus, using the same provisioning level, loss-rates are likely to be equal or lower e.g. for a TB filter monitoring 9 Mbps of reserved capacity compared to for a TB filer monitoring 8 Mbps of reserved capacity.

Note that increasing the provisioning level (res_max) means to also increase the measurement threshold (measure_th * res_max).

Case two: preserve the current provisioning level

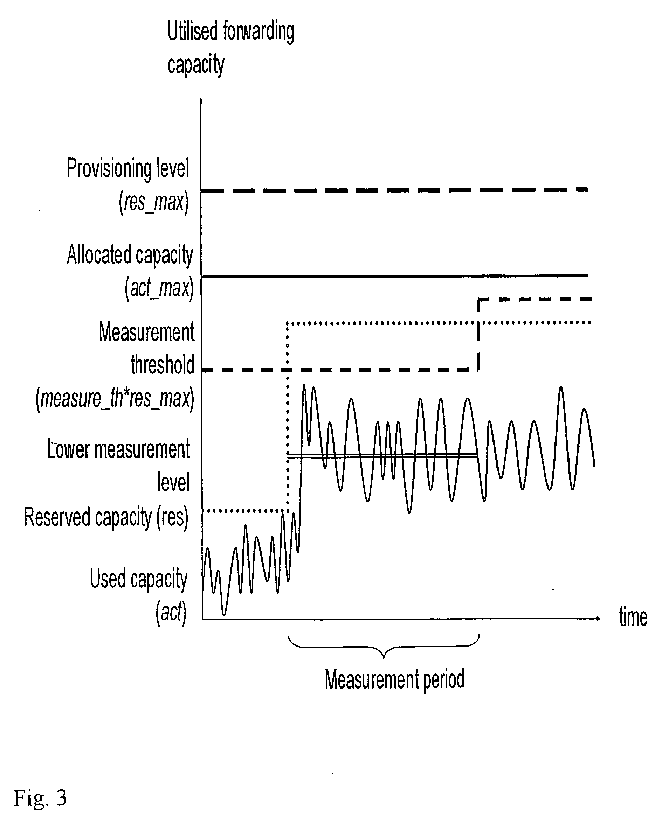

In figure 3 a diagram over the utilised forwarding capacity on a link where the used capacity is higher than in figure 2 is shown. Quality violations are only detected at the lower rate measured. If the lower TB filter indicates a loss-rate higher than assured_lr, but the TB filter at act_max indicates a loss-rate lower than assured_lr, the provisioning level (res_max) should not be adjusted. I.e., the measurements do not give any clear indication on how to adjust the provisioning. To get a clear indication, more resources need to be reserved.

To reduce the amount of unnecessary measurements, the lower TB filter can in one embodiment be raised step by step by increasing measure_th (which shrinks the measurement span since res_max is not changed). The measurement threshold can be increased using a suitable equation, e.g.: using a fixed rate (incr_rate):

$$measure\_th = incr\_rate * measure\_th \qquad\qquad (equation\ 2)$$

This increase can be made until the measurement threshold (measure_th * res_max) becomes equal to the res_max (i.e., measure_th must be lower than 1). Another example for how to make the increase is to use the following equation:

$$measure\_th = (1.0 + measure\_th) / 2.0 \qquad\qquad (equation\ 3)$$

Note that increasing measure_th leads to that the lower measurement level will be equal or higher than for the measurement period resulting in the increase. This is because the fraction res/res_max used in the definition of the lower measurement level (i.e., (res/res_max) * act_max) is an invariant related to the measurement threshold. I.e., res needs to be equal or larger than this threshold (i.e., res_max * measure_th) for measurements to be initialized. The measurement threshold could also be increased manually.

There is however a risk in shrinking the measurement span since that gradually disables the algorithm from detecting changes in the multiplexing properties of the ADF aggregate (i.e., measurement may not be taken at a level of reserved capacity that causes quality violations). Therefore, the option of reducing the measurement span should be combined with a minimum span (min_span). Then, when reaching this minimum span, the mechanism of shrinking the measurement span can be disabled. Note that setting min_span to zero means that the measurement span eventually may shrink to zero. It could also be preferable to measure at the first rate continuously in order to detect quality violations.

Case 3: Decrease the provisioning level

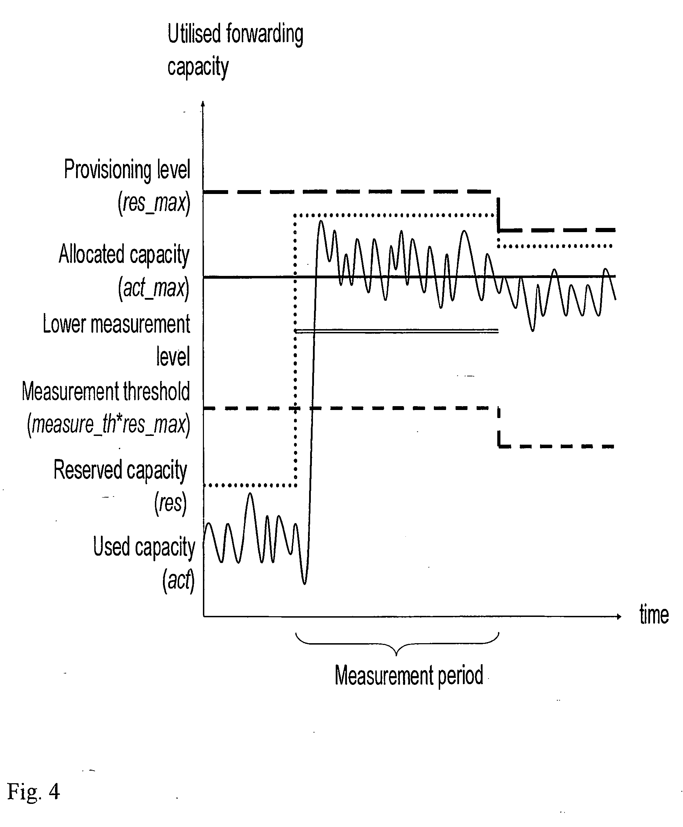

In Figure 4 a diagram over the utilised forwarding capacity on a link where the used capacity is high and quality violations are measured at both rates is shown. If both TB filters indicate higher loss-rate than assured_lr, the threshold has to be decreased to avoid violating the quality metric. The new provisioning level is calculated using equation 1. Note that this implies to pre-empt accepted ADFs until the provisioning level in question is not exceeded.

To avoid oscillations in provisioning level adjustments, further increases of the level for a link that has once decreased its provisioning level can be prevented. However, even if this is the default behaviour, further threshold increases after a decrease should be possible to enable. Moreover, the operator should be able to reset the state manually in an attempt to retry increasing provisioning levels (e.g., because the multiplexing properties of traffic aggregates are assumed to have changed).

Pre-empting ADFs is not required for the algorithm. Violation of the assured quality can be accepted by allowing exceeding ADFs to keep their reservation and instead block new reservations until the reserved capacity becomes less than the provisioning level. Moreover, given that act_max, i.e. the first measurement rate, is slightly lower than the capacity actually allocated for the link in question, measurements at an additional rate can be used to decide whether pre-empting ADFs are needed or not. E.g., a TB filer with a rate in between the actually allocated capacity and act_max can be initialised. If this TB filer indicates higher loss-rate than assured_lr, pre-empting ADFs can be considered necessary to avoid true quality violations. On the other hand, an indication of lower loss-rate than assured_lr with this TB filter means that ADFs will not see any quality violations and pre-empting ADFs is thus not needed. Hence, we include this feature as an optional part of the algorithm.

Algorithm outline

The following pseudo code defines one embodiment of this invention more formally:

```
if (res > measure_th * res_max) then initiate measurements;
if (act_lr < assured_lr at both TB filters) then
        res_max = res_max * log assured_lr / log act_lr ;
end
if (act_lr < assured_lr at higher TB filter and act_lr > assured_lr at lower TB filter)
then
        keep provisioning level;
        if (incr_rate is defined) then
                measure_th = incr_rate * measure_th;
                if (measure_th > 1.0) then measure_th = 1.0;
        else
                measure_th = (1.0 + measure_th) / 2.0;
        end
        if (measure_th * res_max > res_max - min_span) then
                measure_th = (res_max - min_span) / res_max ;
        end
end
if (act_lr > assured_lr at both TB filters) then
        res_max = res_max * log assured_lr / log act_lr;
        possibly prevent further increases (default);
end
```

According to the invention a node or a server in a network which comprises software for performing admission control further comprises software for performing the method as described above. Furthermore the node comprises or is connectable to a measuring means adapted to perform the measurements on the links as defined above.

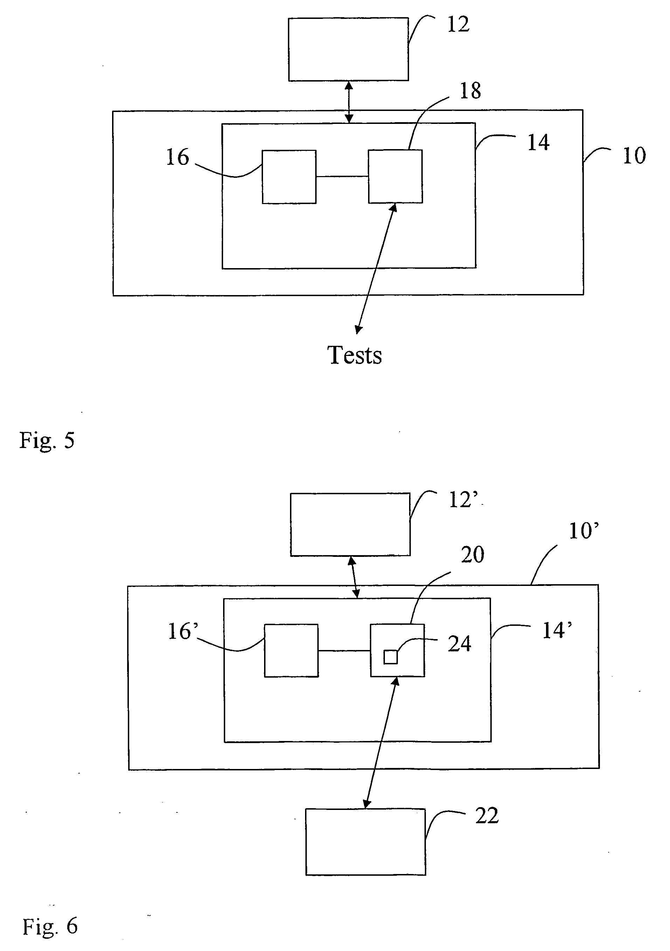

In fig. 5 a node 10 according to the first embodiment of the invention is shown. The node is located somewhere in a network. A client 12 is connectable to the node 10 and requests reservations from the node. Said node comprises admission controlling means 14 adapted to perform admission control in order to offer assurances on forwarding quality in networks. Said admission controlling means 14 comprises threshold setting means 16 adapted to set a threshold for each link, said threshold defining a maximum sum of forwarding resources requested by applications for their application data flows, ADFs, on the link. According to the invention said threshold setting means 16 is further adapted to utilise knowledge about multiplexing properties of the ADFs on each link and knowledge about forwarding properties of the link when choosing the level of said threshold.

Suitably, the threshold setting means 16 is further adapted to utilise knowledge about the traffic mix of different ADFs on each link when choosing the levels of said thresholds.

In this second embodiment the threshold setting means 16' is adapted to set an initial threshold for each link. Furthermore the admission controlling means 14' comprises a measurement requesting means 20, which is connected to the threshold setting means 16' and adapted to retrieve measurements from a measuring means 22 in a node in the network. It could be in another node or in the same node as the admission controlling means. The measuring means 22 is adapted to repeatedly, during usage, measure multiplexing properties of aggregated ADFs online on each link and these measurements are thus forwarded to the measurement requesting means in the admission control means 14'. The threshold setting means 16' is then adapted to use these measurements to dynamically adapt the thresholds to the measurements during usage.

The measuring means 22 performs measurements at at least two different rates, one measurement at a first rate, which is equal to or lower than the amount of allocated resources on the link and one measurement at a second rate, which is lower than the first rate. The second rate can be dependent on the reserved resources on the link and the threshold as described above. To be able to recognise an overload in time and in order to have a safety margin it can be preferable to measure at a first rate which is slightly lower than the amount of allocated resources on the link.

The threshold setting means 16' is adapted to

- increase the threshold when both the measurement at the first and second rates indicate lower loss-rates than what is assured;
- decrease the threshold when both the measurement at the first and second rate indicate higher loss-rates than what is assured; and
- maintaining the threshold when the measurement at the second rate indicates higher loss-rate than assured and the measurement at the first rate indicates lower loss-rate than assured.

The measurement requesting means 20 comprises suitably, but not necessarily a measurement threshold means 24 adapted to define a level of resource reservations on the link above which the measurements should be requested. I.e. a measurement threshold is set and when the level of reservations rises above this measurement threshold measurements are requested to be done in the measuring means 22.

In one embodiment the measurement threshold means 24 is adapted to increase the measurement threshold in steps when the measurement at the second rate indicates higher loss-rate than assured and the measurement at the first rate indicates lower loss-rate than assured. However, the measurement threshold should never be increased over a predefined maximum level which is set to be equal to or lower than the level of allocated resources of the link. The measurement threshold could also be increased manually.

In one embodiment of the invention the measuring means 22 is adapted to measure at a third rate, which is higher than the first rate but equal to or lower than the level of allocated resources on the link, when the measurement at the first rate indicates a higher loss rate than assured. The loss rate measured at this third rate is indicative of if it is necessary to pre-empt ADFs from the link or if it is enough to prevent new ADFs from entering the link.

The main merits of the invention are that it allow for services assuring forwarding quality and high network utilization through statistical multiplexing without requiring processing intensive measurement in network nodes. The embodiment requires periods of measurements invoked for individual links when critical amounts of forwarding capacity is reserved. Since these periods are invoked only when measurement are needed to try adjusting an admission threshold, the measurement overhead is limited.

However, measurements are made by network nodes facing high load. Thus, the burden on network nodes caused by measurements can still be a problem. To avoid overloading network nodes, the CPU load can preferably be checked before initialising measurements. Note, though, that measurements are made on coarser time-scales than measurements for creation of statistically guaranteed forwarding quality.

The selection of which embodiment to use (i.e., to estimate multiplexing properties of ADFs for service provisioning, or to measure multiplexing properties of traffic aggregates for provisioning) is a trade-off between having no measurement overhead but lower network utilization, and having a measurement overhead but higher network utilization. Also, with the embodiment, time consuming estimations of ADFs' multiplexing properties through simulations, lab tests, or modelling is avoided. However, as mentioned above, such estimations can give less frequent measurements and faster adaptation to appropriate thresholds.

The method according to the invention is implemented by means of a computer program product comprising the software code means for performing the steps of the method. The computer program product is run on a computer placed in a node in a network as described for the two embodiments above. The computer program is loaded directly or from a computer usable medium, such as a floppy disc, a CD, the Internet etc.

The present invention is not limited to the above-described preferred embodiments. Various alternatives, modifications and equivalents may be used. Therefore, the above embodiments should not be taken as limiting the scope of the invention, which is defined by the appending claims.

**Claims**

1. A method for performing admission control in order to offer assurances on forwarding quality in networks, the admission control comprising setting a provisioning level (res_max) for each link in a network where said provisioning level (res_max) defines a maximum sum of forwarding resources, like buffer capacity and/or forwarding capacity, requested by applications for their application data flows, ADFs, on the link,

    - the method including measuring at a first measurement level (act_max), which is equal to or lower than the amount of allocated forwarding resources on the link,
    **characterised by**
    - additionally measuring at a second measurement level, which is lower than the first measurement level (act_max) and which is dependent on a reserved forwarding capacity (res) and on the provisioning level (res_max), and by:
    - increasing the provisioning level (res_max) when both the measurements at the first and the second measurement level indicate loss-rates being lower than assured;
    - decreasing the provisioning level (res_max) when both the measurements at the first and the second measurement level indicate loss-rates being higher than assured; and
    - maintaining the provisioning level (res_max) when the measurement at the second measurement level indicates loss-rate being higher than assured and the measurement at the first measurement level indicates loss-rate being lower than assured.

2. The method according to claim 1, **characterised in that** the second measurement level is proportional to the first measurement level (act_max), multiplied with the reserved forwarding capacity (res) and divided by the provisioning level (res_max).

3. The method according to claim 1 or 2, **characterised in that** the measurement at the lower, second measurement level is initiated when the reserved forwarding capacity (res) on the link reaches a fraction (measure_th) of the provisioning level (res_max) representing a measurement threshold ((measure_th)*(res_max)).

4. The method according to one of claims 1 to 3, **characterised by** setting the provisioning level (res_max) to an initial value for each link and dynamically adapting said provisioning level (res_max) repeatedly based on the measurements at the first and second measurement levels.

5. The method according to claim 3 or 4, characterised y increasing the measurement threshold ((measure_th)*(res_max)) in steps but not over a redefined maximum level which is lower than the level (act_max) of allocated forwarding resources of the link when the measurement at the second measurement level indicates loss-rate being higher than assured and the measurement at the first measurement level indicates loss-rate being lower than assured.

6. The method according to one of claims 1 to 5, **characterised by** measuring at a third measurement level, which is higher than the first measurement level but equal to or lower than the allocated forwarding resources of the link when the measurement at the first measurement level indicates a loss-rate higher than assured, the loss-rate measured at the third measurement level being indicative of if it is necessary to pre-empt ADFs from the link or if it is sufficient to prevent new ADFs from entering the link.

7. A node (10; 10') in a network for performing admission control in order to offer assurances on forwarding quality in the network, said node comprising admission controlling means (14;14') adapted to perform admission control in order to offer assurances on forwarding quality in networks, said admission controlling means (14;14') comprising provisioning level (res_max) setting means (16;16') adapted to set a provisioning level (res_max) for each link in the network, said provisioning level (res_max) defining a maximum sum of forwarding resources, like buffer capacity and/or forwarding capacity, requested by applications for their application data flows, ADFs, on the link,
the measurement requesting means (20) is adapted to retrieve a measurement performed at a first measurement level (act_max), which is equal to or lower than the amount of allocated forwarding resources on the link, and
**characterised in that**
the measurement requesting means (20) is further adapted to retrieve a measurement performed at a second measurement level, which is lower than the first measurement level (act_max) and which is dependent on the reserved forwarding resources (res) on the link and the provisioning level (res_max),
and **in that** the provisioning level (res_max) setting means (16') is adapted to:

- increase the provisioning level (res_max) when both the measurements at the first and second measurement level indicate loss-rates being lower than assured;
- decrease the provisioning level (res_max) when both the measurements at the first and second measurement level indicate loss-rates being higher than assured; and
- maintaining the provisioning level (res_max) when the measurement at the second measurement level indicates loss-rate being higher than assured and the measurement at the first measurement level indicates loss-rate being lower than assured.

8. The node according to claim 7, **characterised in that** the second measurement level is proportional to the first measurement level (act_max), multiplied with the reserved forwarding capacity (res) and divided by the provisioning level (res_max).

9. The node according to claim 7 or 8, **characterised in that** the measurement requesting means (20) comprises a measurement threshold means (24) adapted to initiate the measurement at the lower, second measurement level when the reserved forwarding capacity (res) on the link reaches a fraction (measure_th) of the provisioning level (res_max) representing a measurement threshold ((measure_th)*(res_max)).

10. The node according to one of claims 7 to 9, **characterised in that** the provisioning level (res_max) setting means (16') is adapted to set the provisioning level (res_max) to an initial value for each link and **in that** the admission controlling means (14') comprises a measurement requesting means (20), which is connected to the provisioning level (res_max) setting means (16') and adapted to retrieve measurements from a measuring means (22) in the network, which is adapted to repeatedly measure multiplexing properties of aggregated ADFs online on each link, and **in that** the provisioning level (res_max) setting means (16') is adapted to use these measurements to dynamically adapt the provisioning level (res_max).

11. The node according to one of claims 7 to 10, **characterised in that** the measurement threshold means (24) is adapted to increase the measurement theshold in steps but not over a predefined maximum level which is lower than the level of allocated forwarding resources of the link when the measurement at the second measurement level indicates loss-rate being higher than assured and the measurement at the first measurement level indicates loss-rate being lower than assured.

12. The node according to any of the claims 7 to 11, **characterised in that** the measuring requesting means (20) is adapted to retrieve a measurement at a third measurement level, which is higher than the first measurement level but equal to or lower than the allocated forwarding resources on the link when the measurement at the first measurement level indicates a loss-rate being higher than assured, the loss-rate measured at the third measurement level being indicative of if it is necessary to pre-empt ADFs from the link or if it is sufficient to prevent new ADFs from entering the link.

13. The node according to any one of claims 7 to 12, **characterised in that** said node is one of a network node, a network server and a computer.

14. The node according to any one of claims 7 to 13, **characterised in that** said node further comprises software for performing the method of any one of claims 1 to 12.

15. The node according to any one of claims 7 to 14, **characterised in that** the admission controlling means (14;14') and the provisioning level (res_max) setting means (16;16') are software means.

**Patentansprüche**

1. Verfahren zum Durchführen einer Zugangskontrolle, um Garantien über eine Weiterleitungsgüte in Netzwerken zu bieten, wobei die Zugangskontrolle umfasst, ein Bereitstellungsniveau (res_max) für jede Verbindungsstrecke in einem Netzwerk anzusetzen, in dem das Bereitstellungsniveau (res_max) eine Höchstsumme an Weiterleitungsressourcen, wie etwa Zwischenspeicherkapazität und/oder Weiterleitungskapazität definiert, die durch Anwendungen für ihre Anwendungsdatenströme, ADFs, in der Verbindungsstrecke angefordert werden,

- wobei das Verfahren eine Messung bei einem ersten Messpegel (act_max) umfasst, der gleich der oder niedriger als die Menge der in der Verbindungsstrecke zugeteilten Weiterleitungsressourcen ist, **gekennzeich-**

**net durch**

- eine zusätzliche Messung bei einem zweiten Messpegel, der niedriger ist als der erste Messpegel (act_max) und der von einer freigehaltenen Weiterleitungskapazität (res) und dem Bereitstellungsniveau (res_max) abhängt, und **durch**:

- Anheben des Bereitstellungsniveaus (res_max), wenn beide Messungen bei dem ersten und dem zweiten Messpegel Verlustraten anzeigen, die niedriger sind als garantiert;

- Absenken des Bereitstellungsniveaus (res_max), wenn beide Messungen bei dem ersten und dem zweiten Messpegel Verlustraten anzeigen, die höher sind als garantiert; und

- Aufrechterhalten des Bereitstellungsniveaus (res_max), wenn die Messung beim zweiten Messpegel eine Verlustrate anzeigt, die höher ist als garantiert, und die Messung beim ersten Messpegel eine Verlustrate anzeigt, die niedriger ist als garantiert.

2. Verfahren nach Anspruch 1, **dadurch gekennzeichnet, dass** der zweite Messpegel proportional zum ersten Messpegel (act_max), multipliziert mit der freigehaltenen Weiterleitungskapazität (res) und dividiert durch das Bereitstellungsniveau (res_max) ist.

3. Verfahren nach Anspruch 1 oder 2, **dadurch gekennzeichnet, dass** die Messung beim niedrigeren, zweiten Messpegel initiiert wird, wenn die in der Verbindungsstrecke freigehaltene Weiterleitungskapazität (res) einen Bruchteil (measure_th) des Bereitstellungsniveaus (res_max) erreicht, der eine Messschwelle ((measure_th) * (res-max)) darstellt.

4. Verfahren nach einem der Ansprüche 1 bis 3, **gekennzeichnet durch** ein Einstellen des Bereitstellungsniveaus (res_max) auf einen Anfangswert für jede Verbindungsstrecke und wiederholtes dynamisches Anpassen des Bereitstellungsniveaus (res_max) auf Grundlage der Messungen bei dem ersten und dem zweiten Messpegel.

5. Verfahren nach Anspruch 3 oder 4, **gekennzeichnet durch** ein schrittweises Anheben der Messschwelle ((measure_th) * (res-max)), aber nicht über einen neu definierten Höchstpegel hinaus, der niedriger ist als das Niveau (act_max) zugeteilter Weiterleitungsressourcen der Verbindungsstrecke, wenn die Messung beim zweiten Messpegel eine Verlustrate anzeigt, die höher ist als garantiert, und die Messung beim ersten Messpegel eine Verlustrate anzeigt, die niedriger ist als garantiert.

6. Verfahren nach einem der Ansprüche 1 bis 5, **gekennzeichnet durch** eine Messung bei einem dritten Messpegel, der höher ist als der erste Messpegel, aber gleich den oder niedriger als die zugeteilten Weiterleitungsressourcen der Verbindungsstrecke ist, wenn die Messung beim ersten Messpegel eine Verlustrate anzeigt, die höher ist als garantiert, wobei die beim dritten Messpegel gemessene Verlustrate ein Indikator dafür ist, ob es notwendig ist, ADFs aus der Verbindungsstrecke vorbeugend auszuschließen, oder ob es ausreicht, zu verhindern, dass neue ADFs in die Verbindungsstrecke eingehen.

7. Knoten (10; 10') in einem Netzwerk zum Durchführen einer Zugangskontrolle, um Garantien über eine Weiterleitungsgüte im Netzwerk zu bieten, wobei der Knoten Zugangskontrolleinrichtungen (14; 14') umfasst, die dazu ausgelegt sind, eine Zugangskontrolle durchzuführen, um Garantien über eine Weiterleitungsgüte in Netzwerken zu bieten, wobei die Zugangskontrolleinrichtungen (14; 14') Einstelleinrichtungen (16; 16') für das Bereitstellungsniveau (res-max) umfassen, die dazu ausgelegt sind, ein Bereitstellungsniveau (res_max) für jede Verbindungsstrecke in dem Netzwerk anzusetzen, wobei das Bereitstellungsniveau (res_max) eine Höchstsumme an Weiterleitungsressourcen, wie etwa Zwischenspeicherkapazität und/oder Weiterleitungskapazität definiert, die durch Anwendungen für ihre Anwendungsdatenströme, ADFs, in der Verbindungsstrecke angefordert werden, wobei eine Messanforderungseinrichtung (20) dazu ausgelegt ist, eine Messung auszulesen, die bei einem ersten Messpegel (act_max) durchgeführt wurde, der gleich der oder niedriger als die Menge der in der Verbindungsstrecke zugeteilten Weiterleitungsressourcen ist, und

**dadurch kennzeichnet, dass**

die Messanforderungseinrichtung (20) darüber hinaus dazu ausgelegt ist, eine Messung auszulesen, die bei einem zweiten Messpegel durchgeführt wurde, der niedriger ist als der erste Messpegel (act_max) und der von den in der Verbindungsstrecke freigehaltenen Weiterleitungsressourcen (res) und dem Bereitstellungsniveau (res_max) abhängt,

und dass die Einstelleinrichtung (16') für das Bereitstellungsniveau (res_max) dazu ausgelegt ist:

- das Bereitstellungsniveau (res_max) anzuheben, wenn die Messungen sowohl beim ersten als auch beim zweiten Messpegel Verlustraten anzeigen, die niedriger sind als garantiert;

- das Bereitstellungsniveau (res_max) abzusenken, wenn die Messungen sowohl beim ersten als auch beim zweiten Messpegel Verlustraten anzeigen, die höher sind als garantiert; und

- das Bereitstellungsniveau (res_max) aufrechtzuerhalten, wenn die Messung beim zweiten Messpegel eine Verlustrate anzeigt, die höher ist als garantiert, und die Messung beim ersten Messpegel eine Verlustrate anzeigt, die niedriger ist als garantiert.

8. Knoten nach Anspruch 7, **dadurch gekennzeichnet, dass** der zweite Messpegel proportional zum ersten Messpegel (act_max), multipliziert mit der freigehaltenen Weiterleitungskapazität (res) und dividiert durch das Bereitstellungsniveau (res_max) ist.

9. Knoten nach Anspruch 7 oder 8, **dadurch gekennzeichnet, dass** die Messanforderungseinrichtung (20) eine Messschwelleneinrichtung (24) umfasst, die dazu ausgelegt ist, die Messung beim niedrigeren, zweiten Messpegel zu initiieren, wenn die in der Verbindungsstrecke freigehaltene Weiterleitungskapazität (res) einen Bruchteil (measure_th) des Bereitstellungsniveaus (res_max) erreicht, der eine Messschwelle ((measure_th) * (res-max)) darstellt.

10. Knoten nach einem der Ansprüche 7 bis 9, **dadurch gekennzeichnet, dass** die Einstelleinrichtung (16') für das Bereitstellungsniveau (res_max) dazu ausgelegt ist, das Bereitstellungsniveau (res_max) auf einen Ausgangswert für jede Verbindungsstrecke einzustellen, und dass die Zugangskontrolleinrichtung (14') eine Messanforderungseinrichtung (20) umfasst, die an die Einstelleinrichtung (16') für das Bereitstellungsniveau (res_max) angeschlossen und dazu ausgelegt ist, Messwerte aus einer Messeinrichtung (22) in dem Netzwerk auszulesen, die dazu ausgelegt ist, wiederholt Multiplexiereigenschaften gebündelter ADFs in jeder Verbindungsstrecke online zu messen, und dass die Einstelleinrichtung (16') für das Bereitstellungsniveau (res_max) dazu ausgelegt ist, diese Messwerte zu verwenden, um das Bereitstellungsniveau (res_max) dynamisch anzupassen.

11. Knoten nach einem der Ansprüche 7 bis 10, **dadurch gekennzeichnet, dass** die Messschwelleneinrichtung (24) dazu ausgelegt ist, die Messschwelle schrittweise, aber nicht über einen vordefinierten Höchstpegel hinaus anzuheben, der niedriger ist als das Niveau zugeteilter Weiterleitungsressourcen der Verbindungsstrecke, wenn die Messung beim zweiten Messpegel eine Verlustrate anzeigt, die höher ist als garantiert, und die Messung beim ersten Messpegel eine Verlustrate anzeigt, die niedriger ist als garantiert.

12. Knoten nach einem der Ansprüche 7 bis 11, **dadurch gekennzeichnet, dass** die Messanforderungseinrichtung (20) dazu ausgelegt ist, einen Messwert bei einem dritten Messpegel auszulesen, der höher als der erste Messpegel, aber gleich den oder niedriger als die zugeteilten Weiterleitungsressourcen in der Verbindungsstrecke ist, wenn die Messung beim ersten Messpegel eine Verlustrate anzeigt, die höher ist als garantiert, wobei die beim dritten Messpegel gemessene Verlustrate ein Indikator dafür ist, ob es notwendig ist, ADFs aus der Verbindungsstrecke vorbeugend auszuschließen, oder ob es ausreicht, zu verhindern, dass neue ADFs in die Verbindungsstrecke eingehen.

13. Knoten nach einem der Ansprüche 7 bis 12, **dadurch gekennzeichnet, dass** der Knoten ein Netzwerkknoten, ein Netzwerkserver oder ein Computer ist.

14. Knoten nach einem der Ansprüche 7 bis 13, **dadurch gekennzeichnet, dass** der Knoten darüber hinaus eine Software zum Durchführen des Verfahrens nach einem der Ansprüche 1 bis 12 umfasst.

15. Knoten nach einem der Ansprüche 7 bis 14, **dadurch gekennzeichnet, dass** die Zugangskontrolleinrichtungen (14; 14') und die Einstelleinrichtungen (16; 16') für das Bereitstellungsniveau (res_max) Software-Mittel sind.

**Revendications**

1. Procédé destiné à réaliser un contrôle d'admission afin d'offrir des garanties sur la qualité de transmission dans des réseaux, le contrôle d'admission comprenant le réglage d'un niveau de dimensionnement (res_max) pour chaque liaison dans un réseau, ledit niveau de dimensionnement (res_max) définissant un total maximum de ressources de transmission, comme la capacité tampon et/ou la capacité de transmission, demandées par des applications pour leurs flux de données d'application (ADF) sur la liaison,

- le procédé incluant une mesure à un premier niveau de mesure (act_max) qui est égal ou inférieur à la quantité de ressources de transmission allouées sur la liaison,

**caractérisé par**
- une mesure additionnelle à un deuxième niveau de mesure qui est inférieur au premier niveau de mesure (act_max) et qui dépend d'une capacité de transmission réservée (res) et du niveau de dimensionnement (res_max), et par :
- l'augmentation du niveau de dimensionnement (res_max) lorsque les deux mesures au premier et au deuxième niveau de mesure indiquent des taux de perte inférieurs à ce qui est garanti ;
- la diminution du niveau de dimensionnement (res_max) lorsque les deux mesures au premier et au deuxième niveau de mesure indiquent des taux de perte supérieurs à ce qui est garanti ; et
- le maintien du niveau de dimensionnement (res_max) lorsque la mesure au deuxième niveau de mesure indique un taux de perte supérieur à ce qui est garanti et la mesure au premier niveau de mesure indique un taux de perte inférieur à ce qui est garanti.

2. Le procédé selon la revendication 1, **caractérisé en ce que** le deuxième niveau de mesure est proportionnel au premier niveau de mesure (act_max), multiplié par la capacité de transmission réservée (res) et divisé par le niveau de dimensionnement (res max).

3. Le procédé selon la revendication 1 ou 2, **caractérisé en ce que** la mesure au deuxième niveau de mesure inférieur est initiée lorsque la capacité de transmission réservée (res) sur la liaison atteint une fraction (measure_th) du niveau de dimensionnement (res_max) représentant un seuil de mesure ((measure_th)*(res_max)).

4. Le procédé selon l'une des revendications 1 à 3, **caractérisé par** le réglage du niveau de dimensionnement (res_max) à une valeur initiale pour chaque liaison et l'adaptation dynamique dudit niveau de dimensionnement (res_max) de manière répétée en fonction des mesures au premier et au deuxième niveau de mesure.

5. Le procédé selon la revendication 3 ou 4, **caractérisé par** l'augmentation du seuil de mesure ((measure_th)*(res_max)) par étapes mais pas au-delà d'un niveau maximum prédéfini qui est inférieur au niveau (act_max) de ressources de transmission allouées de la liaison lorsque la mesure au deuxième niveau de mesure indique un taux de perte supérieur à ce qui est garanti et la mesure au premier niveau de mesure indique un taux de perte inférieur à ce qui est garanti.

6. Le procédé selon l'une des revendications 1 à 5, **caractérisé par** une mesure à un troisième niveau de mesure qui est supérieur au premier niveau de mesure mais égal ou inférieur aux ressources de transmission allouées de la liaison lorsque la mesure au premier niveau de mesure indique un taux de perte supérieur à ce qui est garanti, le taux de perte mesuré au troisième niveau de mesure permettant d'indiquer s'il est nécessaire de retirer des ADF de la liaison ou s'il est suffisant d'empêcher de nouveaux ADF d'entrer sur la liaison.

7. Un noeud (10 ; 10')dans un réseau, destiné à réaliser un contrôle d'admission afin d'offrir des garanties sur la qualité de transmission dans le réseau, ledit noeud comprenant des moyens de contrôle d'admission (14 ; 14') aptes à réaliser un contrôle d'admission afin d'offrir des garanties sur la qualité de transmission dans des réseaux, lesdits moyens de contrôle d'admission (14 ; 14') comprenant des moyens de réglage (16 ; 16') de niveau de dimensionnement (res_max) aptes à régler un niveau de dimensionnement (res_max) pour chaque liaison dans le réseau, ledit niveau de dimensionnement (res_max) définissant un total maximum de ressources de transmission, comme la capacité tampon et/ou la capacité de transmission, demandées par des applications pour leurs flux de données d'application (ADF) sur la liaison,
les moyens de demande de mesure (20) étant aptes à récupérer une mesure réalisée à un premier niveau de mesure (act_max) qui est égal ou inférieur à la quantité de ressources de transmission allouées sur la liaison, et **caractérisé en ce que**
les moyens de demande de mesure (20) sont en outre aptes à récupérer une mesure réalisée à un deuxième niveau de mesure qui est inférieur au premier niveau de mesure (act_max) et qui dépend des ressources de transmission réservées (res) sur la liaison et du niveau de dimensionnement (res_max),
et **en ce que** les moyens de réglage (16') de niveau de dimensionnement (res_max) sont aptes à :

- augmenter le niveau de dimensionnement (res_max) lorsque les deux mesures au premier et au deuxième niveau de mesure indiquent des taux de perte inférieurs à ce qui est garanti ;
- diminuer le niveau de dimensionnement (res_max) lorsque les deux mesures au premier et au deuxième niveau de mesure indiquent des taux de perte supérieurs à ce qui est garanti ; et
- maintenir le niveau de dimensionnement (res_max) lorsque la mesure au deuxième niveau de mesure indique un taux de perte supérieur à ce qui est garanti et la mesure au premier niveau de mesure indique un taux de perte inférieur à ce qui est garanti.

8. Le noeud selon la revendication 7, **caractérisé en ce que** le deuxième niveau de dimensionnement est proportionnel au premier niveau de mesure (act_max), multiplié par la capacité de transmission réservée (res) et divisé par le niveau de dimensionnement (res max).

9. Le noeud selon la revendication 7 ou 8, **caractérisé en ce que** les moyens de demande de mesure (20) comprennent des moyens de seuil de mesure (24) aptes à initier la mesure au deuxième niveau de mesure inférieur lorsque la capacité de transmission réservée (res) sur la liaison atteint une fraction (measure_th) du niveau de dimensionnement (res_max) représentant un seuil de mesure ((measure_th)*(res_max)).

10. Le noeud selon l'une des revendications 7 à 9, **caractérisé en ce que** les moyens de réglage (16') de niveau de dimensionnement (res_max) sont aptes à régler le niveau de dimensionnement (res_max) à une valeur initiale pour chaque liaison et **en ce que** les moyens de contrôle d'admission (14') comprennent des moyens de demande de mesure (20) qui sont connectés aux moyens de réglage (16') de niveau de dimensionnement (res_max) et aptes à récupérer des mesures à partir de moyens de mesure (22) dans le réseau, qui sont aptes à mesurer de manière répétée des propriétés de multiplexage d'ADF agrégés en ligne sur chaque liaison, et **en ce que** les moyens de réglage (16') de niveau de dimensionnement (res_max) sont aptes à utiliser ces mesures pour adapter dynamiquement le niveau de dimensionnement (res_max).

11. Le noeud selon l'une des revendications 7 à 10, **caractérisé en ce que** les moyens de seuil de mesure (24) sont aptes à augmenter le seuil de mesure par étapes mais pas au-delà d'un niveau maximum prédéfini qui est inférieur au niveau de ressources de transmission allouées de la liaison lorsque la mesure au deuxième niveau de mesure indique un taux de perte supérieur à ce qui est garanti et la mesure au premier niveau de mesure indique un taux de perte inférieur à ce qui est garanti.

12. Le noeud selon l'une quelconque des revendications 7 à 11, **caractérisé en ce que** les moyens de demande de mesure (20) sont aptes à récupérer une mesure à un troisième niveau de mesure qui est supérieur au premier niveau de mesure mais égal ou inférieur aux ressources de transmission allouées sur la liaison lorsque la mesure au premier niveau de mesure indique un taux de perte supérieur à ce qui est garanti, le taux de perte mesuré au troisième niveau de mesure permettant d'indiquer s'il est nécessaire de retirer des ADF de la liaison ou s'il est suffisant d'empêcher de nouveaux ADF d'entrer sur la liaison.

13. Le noeud selon l'une quelconque des revendications 7 à 12, **caractérisé en ce que** ledit noeud est soit un noeud de réseau, soit un serveur de réseau, soit un ordinateur.

14. Le noeud selon l'une quelconque des revendications 7 à 13, **caractérisé en ce que** ledit noeud comprend en outre un logiciel pour réaliser le procédé de l'une quelconque des revendications 1 à 12.

15. Le noeud selon l'une quelconque des revendications 7 à 14, **caractérisé en ce que** les moyens de contrôle d'admission (14 ; 14') et les moyens de réglage (16 ; 16') de niveau de dimensionnement (res_max) sont des moyens de logiciel.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6310857 B1

**Non-patent literature cited in the description**

- Quality of Service Agents in the Internet. *Ph.D. thesis,* August 1998, ISBN 1402-1544

- **TECK KIONG LEE ; MOSHE ZUKERMAN.** EFFICIENCY COMPARISONS BETWEEN DIFFERENT MODEL-BASED AND MEASUREMENT-BASED CONNECTION ADMISSION CONTROL UNDER HEAVY TRAFFIC. *Global Telecommunications Conference - Globecom,* 05 December 1999, vol. 2, 1629-1633